# EUROPEAN PATENT SPECIFICATION

(11) **EP 1 659 815 B1**
(45) Date of publication and mention of the grant of the patent: **02.01.2008**
(21) Application number: 04105920.5
(22) Date of filing: 19.11.2004
(51) Int. Cl.: H04Q 7/38, H04L 29/06

(54) **Out-of-coverage service termination using proxy**
Terminierung von Diensten ausserhalb der Funkabdeckung unter Verwendung eines Proxies
Achèvement des service en case de non-couverture en utilisant un proxy

(43) Date of publication of application: 24.05.2006
(73) Proprietor: Research In Motion Limited, Waterloo, Ontario N2L 3W8 (CA)
(72) Inventor: Abdel-Kader, Sherif, N2K 4H7, Waterloo, (CA); Kezys, Vytautas Robertas, L9K 1M3, Hamilton, (CA)
(74) Representative: Rickard, David John

(56) References cited:
- WO-A-03/001762
- AHLIN ESKIL, TELIA: "Tdoc S2-001603" 3GPP TSG SA WG2 TECHNICAL CONTRIBUTION, [Online] 8 September 2000 (2000-09-08), pages 1-2, XP002323665 BRISTOL, UK Retrieved from the Internet: URL:www.3gpp.org> [retrieved on 2005-04-07]
- M.GARCIA-MARTIN, ERICSSON: "3GPP Release 5 requirements on SIP" DRAFT-IETF-SIPPING-3GPP-R5-REQUIREMENTS-00 .TXT, [Online] 11 October 2002 (2002-10-11), pages 1-36, XP015003414 Retrieved from the Internet: URL:www.ietf.org> [retrieved on 2005-04-07]

## Description

The present application relates to methods and devices for gracefully terminating media services in response to out-of-coverage conditions at one of the termination points for the media service and, in particular, to terminating a wireless VoIP call when a mobile device goes out-of-coverage.

Many mobile wireless devices now provide users with the capability to obtain media communication services over packet-based wireless networks. For example, many mobile devices are enabled to provide Voice-over-IP (VoIP). Wireless local area networks (WLANs), such as those defined by the IEEE 802.11 standard, are also becoming more common, especially on business or university campuses or other facilities in order to provide effective wireless coverage to a defined area.

A media service like VoIP operates over a packet-based network using a peer-to-peer connectionless protocol, such as real-time transport protocol (RTP), to exchange data packets between two or more termination points, for example, mobile devices. An RTP path is typically established through the wireless network (and, possibly, other connected networks) using a service set-up or control protocol, like session initiation protocol (SIP). Other control or set-up protocols may also be used to establish an RTP path, or other connectionless peer-to-peer transport path, to facilitate packet exchange for a media service.

A media service in which at least one of the termination points is a mobile device operating in a wireless network is prone to disruption as a result of the mobile device losing coverage. Coverage may be lost for a number of reasons, but most commonly because the mobile device roams into a region in which RF communications between the mobile device and a wireless network base station are interrupted, attenuated, interfered with, or otherwise disrupted. When the mobile device goes out-of-coverage, neither it nor the other termination point (which may also be a mobile device) is necessarily aware of the out-of-coverage condition at an application level. As a result, the service that was established between the two termination points continues, despite the fact that the devices cannot exchange data packets. Therefore the devices remain tied up by a stalled service application when they might otherwise establish other services. The devices may remain busy with the failed service until a user deems the service to have failed and manually initiates termination of the service.

WO03/001762 discloses that, when a mobile device connects to a packet data service node (PDSN) in a particular coverage area or service area, and establishes a session with a remote termination point, the mobile device may enter a dormant state within the session in which it ceases to transmit data packets. Normally, the PDSN is aware of activity by the mobile terminal because it is involved in the session and is aware of data packets transmitted by the mobile terminal. If the mobile terminal transitions to a new service area served by a new PDSN, the old PDSN may be unaware that the mobile terminal has left the area of the old PDSN. To address this problem, it is proposed that the PDSN periodically generates echo requests to the mobile terminal. Should the mobile terminal fail to reply to an echo request then the PDSN releases network resources and tears down the communication link established with the mobile terminal through the PDSN. This action relates to the network resources and communication links specific to the cell area of the old PDSN.

A paper entitled "Ungraceful session termination in the IM domain", referenced as "T-doc S2-001063", proposes the use of a SIP session timer, negotiated during setup of a call. When the call is established, the caller and callee negotiate the timer length. This is a timer monitored by all parties, including the caller, callee, and a SIP proxy (S-CSCF). The timer requires that the caller sends a re-invite message prior to expiry of the timer throughout the duration of the session.

It would be advantageous to provide for methods and devices that more gracefully terminate services in response to out-of-coverage conditions without necessarily requiring manual user intervention.

### GENERAL

This object is solved by the subject matter of independent claim 1 (method), claim 10 (proxy server) and claim 19 (machine readable medium). Preferred embodiments are defined in the dependent claims.

### BRIEF DESCRIPTION OF THE DRAWINGS

Embodiments will now be described, by way of example only, with reference to the attached Figures, wherein:

Figure 1 diagrammatically shows a wireless communications system;

Figure 2 diagrammatically shows another embodiment of the wireless communication system;

Figure 3 shows a block diagram of an embodiment of a mobile device;

Figure 4 shows, in flowchart form, a method for handling out-of-coverage conditions using a proxy server;

Figure 5 shows, in flowchart form, a method of detecting that a remote mobile device has lost coverage; and

Figure 6 shows a flowchart depicting a method of terminating a service in response to an out-of-coverage condition in a wireless device.

Like reference numerals are used throughout the Figures to denote similar elements and features.

### DESCRIPTION OF PREFERRED EMBODIMENTS

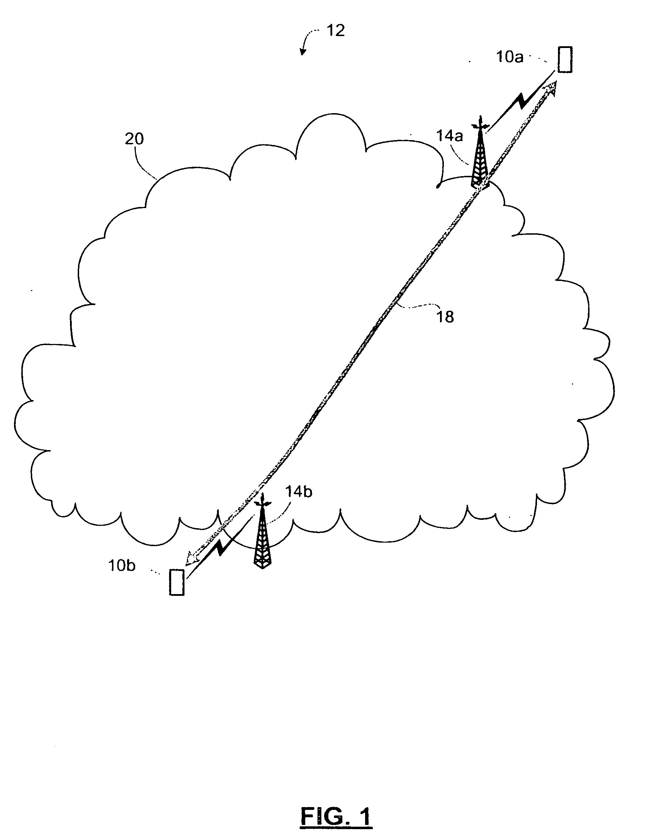

Reference is first made to Figure 1, which diagrammatically shows a wireless communications system 12. The wireless communications system 12 includes a plurality of access points or base stations 14 (two are shown individually as 14a and 14b) interconnected in a network 20. The wireless communications system 12 may comprise a wireless local area network associated with a campus, building, or other facility. For example, the wireless communication system 12 may comprise a wireless network conforming to IEEE 802.1 1 standards. In other embodiments, the wireless communications system 12 may comprise any wireless communications network or combination of interconnected networks, including, without limitation, TDMA, CDMA, GSM/GPRS, EDGE, UMTS or CDPD. The wireless communications system 12 may be connected to other networks or communication systems including, for example, the public switched telephone network (PSTN) (not shown), or a wide area network such as the Internet (not shown).

As is known, the base stations 14 perform radio frequency (RF) protocols to support data and voice exchanges with one or more mobile devices 10 (shown individually as 10a and 10b). Each mobile device 10 is configured to exchange RF-based communications with one of the base stations 14 using known protocols. The mobile device 10a may establish a service with another mobile device 10b or other termination point, wherein the service includes sending and/or receiving media packets through the wireless communications system 12 over a media path 18. The media packets relate to real-time media, such as audio, video, or multi-media applications. In one embodiment, the media packets relate to a Voice-over-IP call. In other embodiments the media packets may relate to video sessions, streaming audio or video, real-time gaming applications or other multi-media sessions. Such a media session may be established over IP-based networks using real-time transport protocol (RTP) on top of user datagram protocol (UDP). Session initiation protocol (SIP) or other control protocols may be employed to set-up, manage, control, and or tear down media paths between termination points.

Although Figure I depicts a media session between two mobile devices 10 in the wireless communication system 12, it will be appreciated that the present application is not limited to point-to-point media services and may include multi-cast or broadcast communications. Moreover, the present application is not limited to communications within the wireless communications system 12. The media service may be established between a mobile device 10 within the wireless communication system and termination points located on other networks connected with the wireless communication system 12, including through the Internet or the PSTN. The termination points are not necessarily other mobile devices 10, and may include IP phones, personal computers, gateways, media servers, and any other device capable of terminating a media service.

The media service operating over the media path 18 is prone to disruption if one of the mobile devices 10 goes out-of-coverage. Coverage may be lost for a number of reasons, but most commonly because the mobile device 10 roams into a region in which RF communications between the mobile device 10 and a wireless network base station 14 are interrupted, attenuated, interfered with, or otherwise disrupted. When the mobile device 10 goes out-of-coverage, at an application level neither it nor the other termination point (which may also be a mobile device 10) may be aware of the out-of-coverage condition. As a result, the service that was established between the two termination points may continue, despite the fact that packets cannot be sent or received from the out-of-coverage mobile device 10.

In accordance with an aspect of the present application, the out-of-coverage mobile device, for example mobile device 10a, self-terminates the media service after a predetermined time if coverage has not been restored. The mobile device 10a detects when coverage is first lost and begins a timer. If coverage is restored, then the timer is reset and the media service resumes normal operation. If coverage is not restored before expiry of a predetermined time period, then the out-of-coverage mobile device 10a presumes that it will not regain coverage soon and it terminates the service. For example, in the case of a VoIP call, it releases the call.

In accordance with another aspect of the present application, the in-coverage mobile device 10b may also self-terminate the media service if it recognizes that the other device 10a has lost coverage and has not regained it within a preset time period. The in-coverage mobile device 10b may recognize that the other device 10a has lost coverage by noting that the other device 10a has ceased sending data packets. The in-coverage mobile device 10b may start a timer after receipt of a data packet from the other device 10a. If no further data packets are received from the other device 10a before expiry of the preset time period, then the in-coverage device 10b may assume that the other device 10a has lost coverage and has been unable to regain it. The in-coverage device 10b may then terminate the service. For example, in the case of a VoIP call, the in-coverage device may release the call. It may also send a call release command, like a SIP BYE message to the other device 10a or its proxy server.

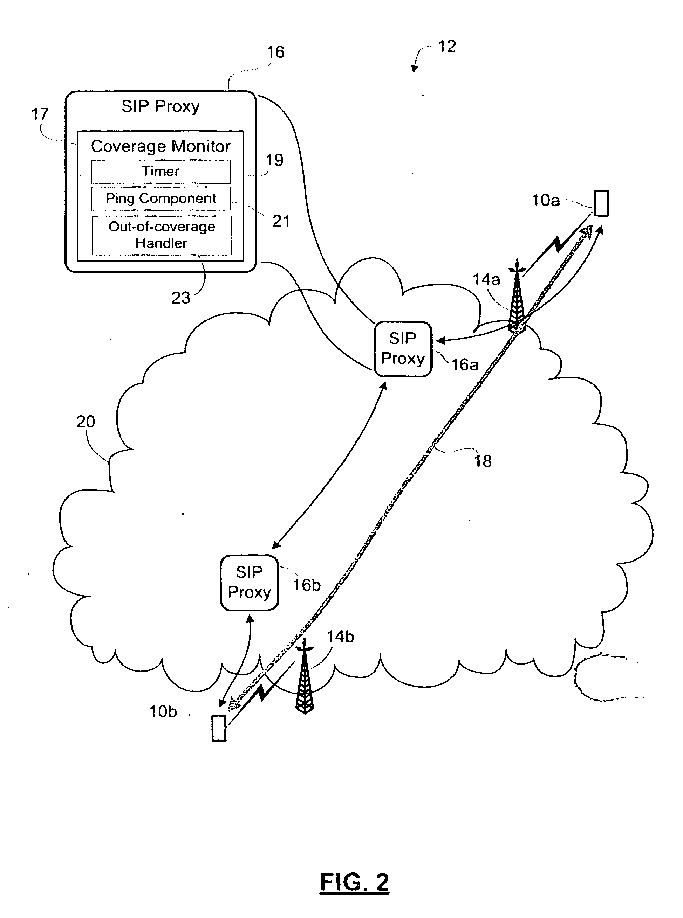

Reference is now made to Figure 2, which diagrammatically shows another embodiment of the wireless communication system 12. Figure 2 shows one or more proxy servers 16 (shown individually as 16a and 16b) within the wireless network 20.

In one embodiment, the proxy servers 16 may comprise call control or set-up servers for communicating with an associated mobile device 10 to setup the media path 18 to enable establishment of the media service between the mobile devices 10. In one example embodiment, the proxy servers 16 comprise SIP proxies for performing SIP signalling to set up an RTP path for the media service.

In accordance with one aspect of the present invention, a proxy server 16 monitors its associated mobile device 10 to detect an out-of-coverage condition. If the proxy server 16 determines that its associated mobile device 10 has gone out-of-coverage and has not regained coverage within a set time period, then it informs the other mobile device 10 and/or its associated proxy server 16 about the out-of-coverage condition. The proxy server 16 having the associated out-of-coverage mobile device 10 may send a service termination message upon determining that the device 10 has been out-of-coverage for the set time period. For example, in the embodiment shown in Figure 2, the SIP proxy 16a may send a SIP BYE message to the other SIP proxy 16b if mobile device 10a goes out-of-coverage for more than the preset time period.

To determine whether its associated mobile device 10 has lost coverage, the SIP proxies may each include a coverage monitor 17. The coverage monitor 17 may include a timer 19, a ping component 21, and an out-of-coverage handler 23. The coverage monitor 17 is configured to detect when the mobile device 10 goes out-of-coverage and determine whether the device 10 is likely to regain coverage in a reasonable period of time. The coverage monitor 17 is also configured to notify the other party or termination point if the mobile device 10 is unlikely to regain coverage.

In particular, the ping component 21 sends a periodic ping or other message to the associated mobile device 10. Upon receipt of the ping, the mobile device 10 responds with a reply message. The ping may be any message to which the mobile device 10 will automatically respond if it is capable of receiving the ping and sending a response, i.e. if it is in coverage. The ping component 21 may ping the mobile device 10 on a periodic basis, such as for example once every second. It will be appreciated that it could be more often or less often depending on the circumstances and any concern with the overhead created by the ping messages.

The timer 19 monitors the time between reply messages. If the mobile device 10 fails to send a reply message for a set period of time, for example ten or more seconds, then the timer 19 expires. Expiry of the timer 19 is indicative of the mobile device 10 being out-of-coverage.

The out-of-coverage handler 23 reacts to expiry of the timer 19 by sending an out-of-coverage message to the other termination point or its proxy server 16. In one embodiment, the out-of-coverage handler 23 sends a service termination message to gracefully terminate the service due to the out-of-coverage condition. In an embodiment wherein the proxy server 16 comprises a SIP proxy, the out-of-coverage handler 23 sends a SIP BYE message to terminate the SIP session.

Those of ordinary skill in the art will appreciate that the mobile device 10 is configured to accept and respond to ping messages from the proxy server 16. Moreover, those of ordinary skill in the art will appreciate that it may be advantageous for the other termination point or its associated proxy server to accept service termination messages or commands from the proxy server 16. In some cases, the other termination point may be configured to reject such messages or commands from an unknown server. Accordingly, it may be advantageous to use a proxy server having an existing relationship with the mobile device 10 and the other termination point and/or its proxy, since they will be configured to accept communications from such a source. For example, the proxy server 16 may comprise the media service control server associated with setting up the media path 18 between the termination points to enable the media service. In one embodiment, the proxy server 16 may comprise a SIP proxy. In another embodiment, the proxy server 16 may comprises an H.323 proxy.

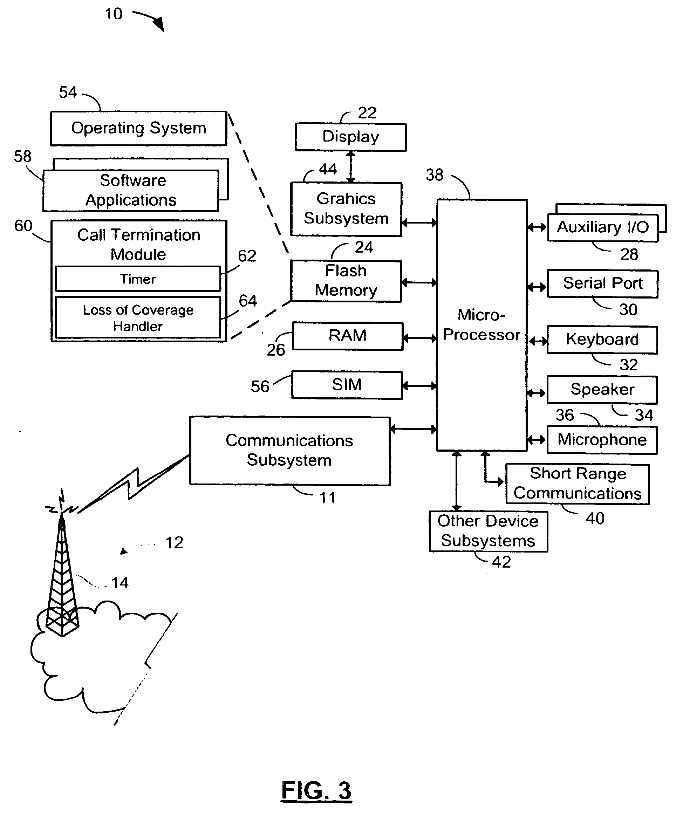

Reference is now made to Figure 3, which shows a block diagram of an embodiment of a mobile device 10. The mobile device 10 is a hand-held two-way mobile communication device having at least data and possibly also voice communication capabilities. In an example embodiment, the device 10 has the capability to communicate with other computer systems on the Internet. In various embodiments, the mobile device 10 may include a data communication device, a multiple-mode communication device configured for both data and voice communication, a mobile IP telephone, a mobile communication device, a PDA enabled for wireless communications, a 1-way or 2-way pager, a wireless modem operating in conjunction with a computer system, and any other type of mobile wireless communication device capable of engaging in real-time packet-based communication services such as, for example, VoIP. In the presently described embodiment, the mobile device 10 is configured to operate within the wireless communications system 12. It should be appreciated however that the present application is in no way limited to these example types of devices and may be implemented in other devices.

The device 10 includes a communication subsystem 11. The communications subsystem 11 manages the wireless RF communications with base stations 14 in the wireless communications system 12. The communication subsystem I I may include one or more antennae, a transceiver, a processing element like a digital signal processor and other components. As will be apparent to those skilled in the field of communications, the particular design of the communication subsystem 11 will be dependent upon the wireless communications system 12 in which the device 10 is intended to operate. The communication subsystem 11 manages the tasks of establishing a connection with a base station 14 and sending and receiving packets over the connection.

The device 10 includes a microprocessor 38 that controls the overall operation of the device 10. The microprocessor 38 interacts with the communications subsystem 11 and also interacts with further device subsystems such as the display 22, flash memory 24, random access memory (RAM) 26, subscriber identity module (SIM) 56, auxiliary input/output (I/O) subsystems 28 (which may include a thumb-wheel, for example), serial port 30, keyboard or keypad 32, speaker 34, microphone 36, a short-range communications subsystem 40, and any other device subsystems generally designated as 42.

Some of the subsystems shown in Figure 3 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Host operating system software 54 and various host software applications 58 used by the microprocessor 38 are, in one example embodiment, stored in a persistent store such as flash memory 24 or similar storage element. Host software applications 58 may include a wide range of applications, including a text messaging application, a ring tone application, a contacts application, and/or a game application. Those skilled in the art will appreciate that the host operating system 54, specific host applications 58, or parts thereof, may be temporarily loaded into a volatile store such as RAM 26. It is contemplated that received communication signals may also be stored to RAM 26.

The microprocessor 38, in addition to its operating system functions, enables execution of host software applications 58 on the device. A predetermined set of host applications 58 which control basic device operations, including at least voice communication applications for example, will normally be installed on the device 10 during manufacture. Further applications may also be loaded onto the device 10 through the WLAN 12, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a communication mode, a received signal such as a voice call, a text message, or web page download will be processed by the communication subsystem 11 and input to the microprocessor 38, which will preferably further process the received signal for output to the speaker 34 or the display 22, or alternatively to an auxiliary I/O device 28. A user of device 10 may also compose data items such as text messages for example, using the keyboard 32 in conjunction with the display 22 and possibly an auxiliary I/O device 28. Such composed items may then be transmitted over a communication network through the communication subsystem 11.

The serial port 30 in Figure 3 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices.

The mobile device 10 also includes a call termination module 60. The call termination module 60 provides self-termination capability to react to out-of-coverage conditions. The loss of coverage may relate to the mobile device 10 itself or to a remote termination point engaged in a media service with the mobile device 10.

The call termination module 60 includes a timer 62 and a loss of coverage handler 64.

In one aspect according to the present application, the timer 62 is configured to start when the mobile device 10 loses coverage. The loss of coverage may be detected by the communications subsystem 11, which may issue a message or signal (or event, interrupt, etc.) indicating the loss of coverage. The timer 62 starts in response to detection of the loss of coverage and is reset if coverage is re-established. The reestablishment of coverage may cause the communications subsystem I 1 to issue a further message or signal indicating that coverage has been re-obtained. Alternatively, the loss of coverage may be deduced by polling the communications subsystem I 1 to determine the signal level. If the device is in coverage, it may expect a signal level in the range - 90dBm to -20dBm. If the communication subsystem 11 reports a signal level below about -100 dBm or -150 dBm, then the call termination module 60 may deduce that coverage has been lost and it may trigger the timer 62.

If coverage is not re-obtained before expiry of the timer 62, then the loss of coverage handler 64 is triggered. The loss of coverage handler 64 terminates the service locally due to the loss of coverage by the mobile device 10. For example, the loss of coverage handler 64 may issue a service release command to the media service application, such as a VoIP call release command. The loss of coverage handler 64 may issue other directives to close applications or release resources related to the media service, as may be required by the particular application. In one embodiment, the loss of coverage handler 64 may notify the service application so that the service application can update its user interface to indicate that the service has been disconnected.

In another aspect according to the present application, the timer 62 is configured to start whenever a data packet is received from another mobile device in connection with an active media service. The communications subsystem I or the media service software application 58 may notify the call termination module 60 of receipt of any data packets related to the media service. Whenever a data packet is received from the other mobile device, the timer 62 resets and begins counting anew. In one embodiment, the communication subsystem 11 sends an interrupt (or event, etc.) to the microprocessor 38 whenever a data packet is received. The various layers of the communications protocol route the packet appropriately. An RTP packet is identifiable in part because of the port to which it is sent since the RTP packets are enclosed in UDP packets.

If the timer 62 reaches a preset time period, such as thirty seconds, without receiving any further data packets from the other mobile device, then the timer 62 expires. Expiry of the timer 62 triggers the loss of coverage handler 64, which terminates the service. The loss of coverage handler 64 terminates the service locally due to the loss of coverage by the other mobile device. For example, the loss of coverage handler 64 may issue a service release command to the media service application, such as a VoIP call release command. The loss of coverage handler 64 may issue other directives to close applications or release resources related to the media service, as may be required by the particular application. The loss of coverage handler 64 may also send a service release command to its proxy server, if any, and/or to the other device and/or its proxy server. For example, the loss of coverage handler 64 may cause the mobile device 10 to transmit a SIP BYE message to terminate the SIP session. It will be appreciated that the preset time period may be established having regard to any silence suppression or other techniques that may be employed by the service and that may give rise to an absence of data packets despite the remote mobile device remaining in coverage.

Although Figure 3 depicts the call termination module 60 as residing in flash memory 24 for execution by the microprocessor 38, those of ordinary skill in the art will appreciate that the call termination module 60 may be incorporated as a part of the communication subsystem 11 and may be executed by a processor internal to the communication subsystem 11.

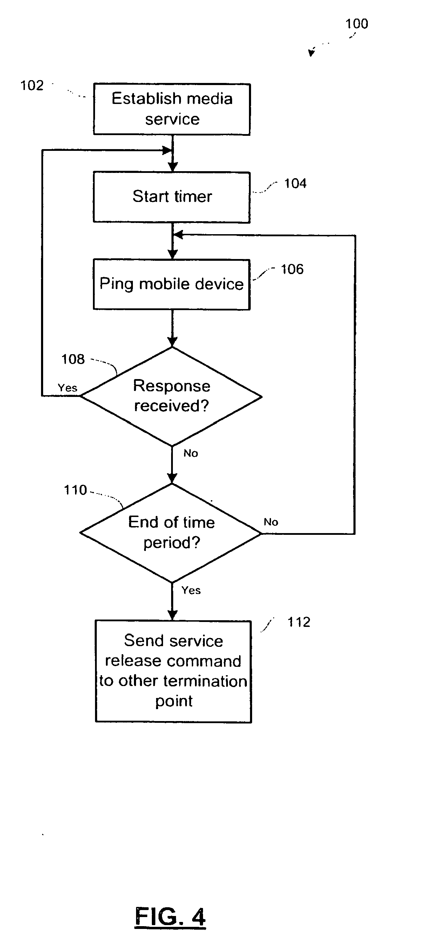

Reference is now made to Figure 4, which shows, in flowchart form, a method 100 for handling out-of-coverage conditions using a proxy server. The method 100 begins in step 102 with establishment of a media service between a mobile device and another termination point. The media service may, for example, be a VolP call. The media service is not necessarily a two-party service and may include multi-point or broadcast communications.

The proxy server may be associated with setting up the media path over which the media data will be sent from the other termination point to the mobile device. For example, the proxy server may be a SIP proxy server and may apply SIP protocols to establish an RTP path.

Once the media service is established, then in step 104 the proxy server initiates a timer and in step 106 it pings the mobile device. In step 108, the proxy server evaluates whether or not it has received a response to the ping. Step 108 may incorporate a certain level of delay to await receipt of a response message. If a response message is received, then the proxy server may conclude that the mobile device is still in-coverage and the method returns to step 104 wherein it repeats. A delay may be incorporated between steps 108 and 104 so as to prevent the proxy server from continually pinging the mobile device. In some embodiments, it may be sufficient to test the mobile device by pinging it about every second. In other embodiments, more frequent or less frequent pinging may be suitable.

If no response is received in step 108 in the normal time frame of, for example, half a second, then in step 110 the proxy server evaluates whether the timer has reached the end of a predetermined time period. The predetermined time period marks the length of time that the proxy server allows for unresponsiveness before it deems the mobile device to be out-of-coverage. In some embodiments, the predetermined time period may be a few seconds, for example between about three and ten seconds. It may be longer or shorter in other embodiments.

If the end of the predetermined time period has not been reached, then the method 100 returns to step 106 to ping the device again. As before, the method 100 awaits a response from the device in step 108. If no response is received after a preset wait period, then the method 100 continues to step 110 again to evaluate whether the timer has reached the end of the predetermined time period.

If the timer has reached the end of the predetermined time period in step 1 10, then the method 100 proceeds to step 112 wherein the proxy server sends a service release command to the other termination point or its proxy server. The service release command may, in one embodiment, comprise a call release message, such as, for example, a SIP BYE message. In one embodiment, the proxy server also marks the mobile device as "unavailable" instead of "busy" since it is now out-of-coverage.

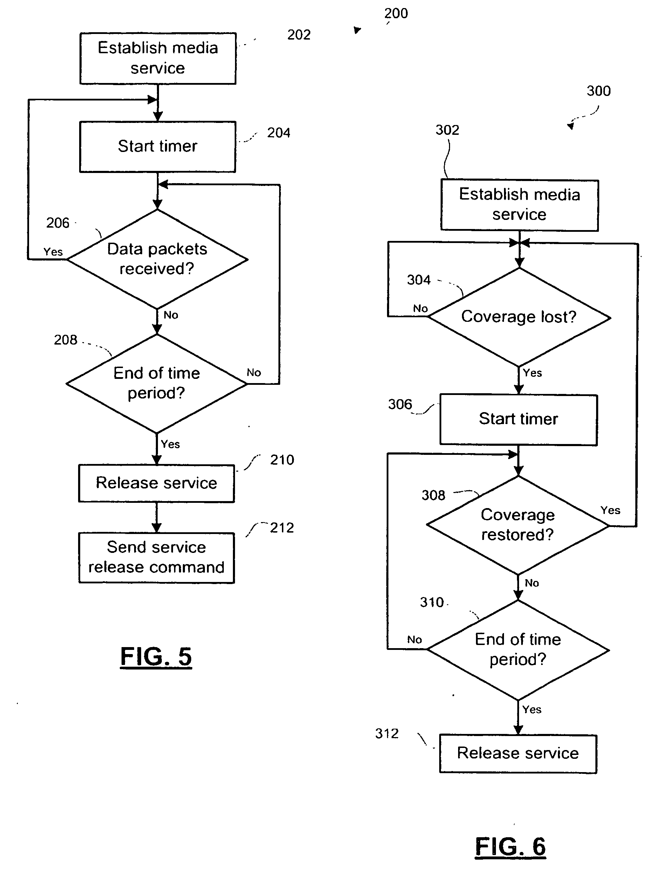

Reference is next made to Figure 5, which shows, in flowchart form, a method 200 of detecting that a remote mobile device has lost coverage. The method 200 is implemented in a termination point, such as a mobile wireless device, and begins in step 202 with the establishment of a media service between the termination point and the remote mobile device. The media service may comprise any service involving transmission of media packets, such as audio or video data. In one embodiment, the media service comprises a VoIP call. The media service involves the transmission of packetized real-time data using a connectionless transport protocol, such as RTP. Because the media path is connectionless, the termination point may be unaware that the mobile device has lost coverage.

To detect whether the mobile device has lost coverage, the termination point starts a timer in step 204 and watches for receipt of a data packet from the mobile device in step 206. lf a data packet is received in step 206, then the method 200 returns to step 202 to reset the timer and begin watching for data packets from the mobile device again. If a data packet is not detected in step 204, then the method 200 evaluates whether the time has reached the end of a predetermined time period in step 208. The predetermined time period corresponds to the length of time after which the termination point will deem the mobile device to have lost coverage if no data packets are received from it. In one embodiment, the predetermined time period may be about thirty seconds; however, it may be shorter or longer depending on the application and implementation.

If the end of the predetermined time period has not been reached in step 208, then the method 200 returns to step 206 to evaluate whether a data packet has been received. It continues to watch for a data packet from the mobile device and evaluate whether the predetermined time period has expired until either event occurs. If the end of the predetermined time period is reached, then the method 200 continues in step 210, wherein the mobile device is deemed to be out-of-coverage and the termination point releases the service. This may include instructing the service application to release any resources, such as media paths, that are assigned to the service. In the case of a VoIP call, it may include issuing a call release command. In step 212, the termination point may also send a service release command to the remote mobile device or to proxy servers within the wireless network. For example, it may send a SIP BYE message.

Now reference is made to Figure 6, which shows a flowchart depicting a method 300 of terminating a service in response to an out-of-coverage condition in a wireless device. As with the method 200 from Figure 5, the method 300 begins in step 302 with the establishment of a media service. The media service involves the transmission of real-time data, such as audio or video, over packet-based networks using a suitable peer-to-peer transport protocol, such as RTP.

In step 304 the mobile device detects that it has lost coverage with the wireless network. It may recognize that it has lost coverage due to a signal from the radio chipset, *i.e.* communication subsystem, in the mobile device. If coverage is lost, then in step 306 the mobile device begins a timer. Then in step 308, the mobile device determines whether it has regained coverage, *i.e.* whether it has been able to resume RF communications with a base station in the wireless network. If so, then the method 300 returns to step 304 to await detection of a further out-of-coverage condition.

If coverage has not been restored, then the method 300 proceeds to step 310 to evaluate whether the timer has reached the end of a predetermined time period. The predetermined time period marks the length of time after which the mobile device may deem that it has lost coverage and will not be able to easily restore coverage. In one embodiment, the predetermined time period is a few seconds, for example about five seconds. If this predetermined time period is reached, then the method 300 continues to step 312, wherein the mobile device locally terminates the active service. This may include notifying any active service applications and releasing any associated device resources. If the predetermined time period has not been reached, then the method 300 returns to step 308 to evaluate whether coverage has been restored.

Those of ordinary skill in the art will appreciate that the foregoing methods described in conjunction with Figures 4, 5, and 6 are example embodiments only. Certain steps may be added, modified, or eliminated without materially affecting the overall functioning of the method in handling an out-of-coverage event. It will be understood that certain steps may be performed concurrently or in an alternative order.

The above-described embodiments of the present application are intended to be examples only. Alterations, modifications and variations may be effected to the particular embodiments by those skilled in the art without departing from the scope of the application, which is defined by the claims appended hereto.

## Claims

1. A method of terminating a media service in a system having a wireless device (10), a remote termination point, and a wireless network (12), the media service operating peer-to-peer between the wireless device (10) and the remote termination point over a connectionless packet-based transport protocol, the wireless network (12) comprising a proxy server (16) associated with the wireless device (10), the method comprising the steps of:
sending a message from the proxy server (16) to the wireless device (10) and awaiting a response to said message from the wireless device (10) so as to determine whether the wireless device (10) remains in coverage;
determining that the wireless device (10) is out-of-coverage based upon expiry of a predetermined time period with a lack of a response from the wireless device (10); and
sending a service release message from the proxy server (16) to the remote termination point to alert the remote termination point to the out-of-coverage condition.

2. The method claimed in claim 1, wherein it further comprises steps of setting up a media path (18) between the wireless device (10) and the remote termination point and establishing the media service over said media path (18).

3. The method claimed in claim 2, wherein the proxy server (16) comprises a service control server configured to perform said step of setting up the media path (18).

4. The method claimed in claim 3, wherein said service control server comprises a Session Initiation Protocol 'SIP' proxy server.

5. The method claimed in any preceding claim, wherein said service release message comprises a SIP BYE message.

6. The method claimed in any preceding claim, wherein said step of sending said message from the proxy server (16) to the wireless device (10) is performed periodically.

7. The method claimed in claim 6, wherein said step of sending said message from the proxy server (16) to the wireless device (10) is performed generally once every second and wherein said predetermined time period is in the order of from three to ten seconds.

8. The method claimed in any preceding claim, wherein the media service comprises a VoIP call.

9. The method claimed in any preceding claim, wherein the connectionless packet-based transport protocol comprises real-time transport protocol 'RTP'.

10. A proxy server (16) for use in a wireless network (12) in association with a mobile device (10) engaged in a media service with a remote termination point over the wireless network (12), the media service operating peer-to-peer between the wireless device (10) and the remote termination point over a connectionless packet-based transport protocol, wherein the proxy server (16) comprises:
a component (21) for sending a message to the mobile device (10) and awaiting a response to said message from the wireless device (10) so as to determine whether the mobile device (10) remains in coverage;
a timer (19) for determining whether the mobile device (10) is out-of-coverage based upon expiry of a predetermined time period without a response from the mobile device (10); and
an out-of-coverage handler (23) for sending a service release message to the remote termination point in response to said determination of an out-of-coverage condition.

11. The proxy server claimed in claim 10, wherein said proxy server (16) comprises a session setup component for setting up a media path (18) between the mobile device (10) and the remote termination point and establishing the media service over said media path (18).

12. The proxy server claimed in claim 11, wherein said proxy server (16) comprises a Session Initiation Protocol 'SIP' proxy server.

13. The proxy server claimed in any one of claims 10 to 12, wherein said service release message comprises a SIP BYE message.

14. The proxy server claimed in any one of claims 10 to 13, wherein said component (21) for sending a message sends said message periodically.

15. The proxy server claimed in any one of claims 10 to 14, wherein said component (21) for sending a message sends said message generally once every second.

16. The proxy server claimed in any one of claims 10 to 15, wherein said predetermined time period comprises in the order of from three to ten seconds.

17. The proxy server claimed in any one of claims 10 to 16, wherein the media service comprises a VoIP call.

18. The proxy server claimed in any one of claims 10 to 16, wherein the connectionless packet-based transport protocol comprises real-time transport protocol 'RTP'.

19. A machine readable medium comprising code means executed in a processor of the proxy server (16) of any of claims 10 to 18, said code means are adapted to perform the method of any of claims 1 to 9.

## Patentansprüche

1. Verfahren zum Terminieren eines Medien-Dienstes in einem System, das ein mobiles Endgerät (10), einen entfernten Terminierungspunkt und ein Drahtlos-Netz (12) umfasst, wobei der Medien-Dienst Peer-to-Peer zwischen dem mobilen Endgerät (10) und dem entfernten Terminierungspunkt über ein verbindungsloses, paketbasiertes Transportprotokoll arbeitet, das Drahtlos-Netz (12) einen Proxy-Server (16) enthält, der dem mobilen Endgerät (10) zugeordnet ist und das Verfahren folgende Schritte umfasst:
Senden einer Nachricht von dem Proxy-Server (16) an das mobile Endgerät (10) und Warten auf eine Antwort auf diese Nachricht von dem mobilen Endgerät (10), um festzustellen, ob das mobile Endgerät (10) innerhalb der Funkabdeckung verbleibt;
Feststellen, dass sich das mobile Endgerät (10) außerhalb der Funkabdeckung befindet, nachdem ein vorab definierter Zeitraum ohne Antwort von dem mobilen Endgerät (10) verstrichen ist; und
Senden einer Dienstauslösenachricht von dem Proxy-Server (16) an den entfernten Terminierungspunkt, um den entfernten Terminierungspunkt zu informieren, dass sich das mobile Endgerät außerhalb der Funkabdeckung befindet.

2. Verfahren gemäß Anspruch 1, das ferner die Schritte umfasst, einen Medienpfad (18) zwischen dem mobilen Endgerät (10) und dem entfernten Terminierungspunkt aufzubauen und den Mediendienst über diesen Medienpfad (18) einzurichten.

3. Verfahren gemäß Anspruch 2, bei dem der Proxy-Server (16) einen Dienststeuerungs-Server umfasst, der dafür konfiguriert ist, den Schritt des Aufbauens des Medienpfades (18) auszuführen.

4. Verfahren gemäß Anspruch 3, bei dem der Dienststeuerungs-Server einen auf dem Session Initiation Protocol "SIP" basierenden Proxy-Server umfasst.

5. Verfahren gemäß einem der vorstehenden Ansprüche, bei dem die Dienstauslösenachricht eine SIP BYE-Nachricht umfasst.

6. Verfahren gemäß einem der vorstehenden Ansprüche, bei dem der Schritt des Sendens der Nachricht von dem Proxy-Server (16) an das mobile Endgerät (10) periodisch ausgeführt wird.

7. Verfahren gemäß Anspruch 6, bei dem der Schritt des Sendens der Nachricht von dem Proxy-Server (16) an das mobile Endgerät (10) allgemein einmal pro Sekunde durchgeführt wird und bei dem der vorab definierte Zeitraum in der Größenordnung von drei bis zehn Sekunden liegt.

8. Verfahren gemäß einem der vorstehenden Ansprüche, bei dem der Mediendienst eine VoIP-Verbindung umfasst.

9. Verfahren gemäß einem der vorstehenden Ansprüche, bei dem das verbindungslose, paketbasierte Transportprotokoll das Real-Time Transport Protocol "RTP" umfasst.

10. Proxy-Server (16) zur Verwendung in einem Drahtlos-Netz (12) in Verbindung mit einem mobilen Endgerät (10), das in einem Mediendienst über das Drahtlos-Netz (12) mit einem entfernten Terminierungspunkt verbunden ist, wobei der Mediendienst Peer-to-Peer zwischen dem mobilen Endgerät (10) und dem entfernten Terminierungspunkt über ein verbindungsloses, paketbasiertes Transportprotokoll arbeitet, wobei der Proxy-Server (16) Folgendes umfasst:
eine Komponente (21) zum Senden einer Nachricht an das mobile Endgerät (10) und Warten auf eine Antwort auf diese Nachricht von dem mobilen Endgerät (10), um festzustellen, ob das mobile Endgerät (10) innerhalb der Funkabdeckung verbleibt;
einen Timer (19) zum Feststellen, ob sich das mobile Endgerät (10) außerhalb der Funkabdeckung befindet, auf Basis des Verstreichens eines vorab definierten Zeitraums ohne Antwort von dem mobilen Endgerät (10); und
einen Out-of Coverage-Handler (23) zum Senden einer Dienstauslösenachricht an den entfernten Terminierungspunkt als Reaktion auf die Feststellung, dass sich das mobile Endgerät außerhalb der Funkabdeckung befindet.

11. Proxy-Server gemäß Anspruch 10, wobei der Proxy-Server (16) eine Sitzungsaufbaukomponente umfasst, um einen Medienpfad (18) zwischen dem mobilen Endgerät (10) und dem entfernten Terminierungspunkt aufzubauen und den Mediendienst über diesen Medienpfad (18) einzurichten.

12. Proxy-Server gemäß Anspruch 11, wobei der Proxy-Server (16) einen auf dem Session Initiation Protocol "SIP" basierenden Proxy-Server umfasst.

13. Proxy-Server gemäß einem der Ansprüche 10 bis 12, wobei die Dienstauslösenachricht eine SIP BYE-Nachricht umfasst.

14. Proxy-Server gemäß einem der Ansprüche 10 bis 13, wobei die Komponente (21) zum Senden einer Nachricht die Nachricht periodisch sendet.

15. Proxy-Server gemäß einem der Ansprüche 10 bis 14, wobei die Komponente (21) zum Senden einer Nachricht die Nachricht allgemein einmal pro Sekunde sendet.

16. Proxy-Server gemäß einem der Ansprüche 10 bis 15, wobei der vorab definierte Zeitraum in der Größenordnung zwischen drei und zehn Sekunden liegt.

17. Proxy-Server gemäß einem der Ansprüche 10 bis 16, wobei der Mediendienst eine VoIP-Verbindung umfasst.

18. Proxy-Server gemäß einem der Ansprüche 10 bis 16, wobei das verbindungslose, paketbasierte Transportprotokoll das Real-Time Transport Protocol "RTP" umfasst.

19. Maschinenlesbarer Datenträger, der Code-Mittel beinhaltet, die in einem Prozessor des Proxy-Servers (16) gemäß einem der Ansprüche 10 bis 18 ausgeführt werden, wobei die Code-Mittel dafür ausgelegt sind, das Verfahren gemäß einem der Ansprüche 1 bis 9 auszuführen.

## Revendications

1. Un procédé destiné à mettre fin à un service multimédia sur un système possédant un dispositif sans fil (10), un point de terminaison distant et un réseau sans fil (12), le service multimédia fonctionnant en mode d'égal à égal entre le dispositif sans fil (10) et le point de terminaison distant par l'intermédiaire d'un protocole de transport par paquets sans connexion, le réseau sans fil (12) comprenant un serveur mandataire (16) associé au dispositif sans fil (10), le procédé comprenant les opérations suivantes :
l'envoi d'un message du serveur mandataire (16) vers le dispositif sans fil (10) et l'attente d'une réponse audit message du dispositif sans fil (10) afin de déterminer si le dispositif sans fil (10) reste en zone de couverture,
la détermination que le dispositif sans fil (10) se trouve hors zone de couverture en se basant sur l'expiration d'une période de temps prédéterminée avec une absence de réponse du dispositif sans fil (10), et
l'envoi d'un message de libération de service du serveur mandataire (16) au point de terminaison distant afin de signaler au point de terminaison distant l'état hors zone de couverture.

2. Le procédé selon la revendication 1, comprenant en outre les opérations d'établissement d'une voie multimédia (18) entre le dispositif sans fil (10) et le point de terminaison distant et l'établissement du service multimédia par l'intermédiaire de ladite voie multimédia (18).

3. Le procédé selon la revendication 2, où le serveur mandataire (16) comprend un serveur de commande de service configuré de façon à exécuter ladite opération d'établissement de la voie multimédia (18).

4. Le procédé selon la revendication 3, où ledit serveur de commande de service comprend un serveur mandataire SIP (protocole d'ouverture de session).

5. Le procédé selon l'une quelconque des revendications précédentes, où ledit message de libération de service comprend un message SIP BYE.

6. Le procédé selon l'une quelconque des revendications précédentes, où ladite opération d'envoi dudit message du serveur mandataire (16) vers le dispositif sans fil (10) est exécutée de manière périodique.

7. Le procédé selon la revendication 6, où ladite opération d'envoi dudit message du serveur mandataire (16) vers le dispositif sans fil (10) est exécutée généralement une fois toutes les secondes et où ladite période de temps prédéterminée est de l'ordre de trois à dix secondes.

8. Le procédé selon l'une quelconque des revendications précédentes, où le service multimédia comprend un appel VoIP.

9. Le procédé selon l'une quelconque des revendications précédentes, où le protocole de transport par paquets sans connexion comprend un protocole RTP (protocole de transport en temps réel).

10. Un serveur mandataire (16) destiné à une utilisation sur un réseau sans fil (12) en association avec un dispositif mobile (10) engagé dans un service multimédia avec un point de terminaison distant par l'intermédiaire du réseau sans fil (12), le service multimédia fonctionnant en mode d'égal à égal entre le dispositif sans fil (10) et le point de terminaison distant par l'intermédiaire d'un protocole de transport par paquets sans connexion, où le serveur mandataire (16) comprend :
un composant (21) destiné à l'envoi d'un message vers le dispositif mobile (10) et l'attente d'une réponse audit message du dispositif sans fil (10) de façon à déterminer si le dispositif mobile (10) reste en zone de couverture,
une horloge (19) destinée à déterminer si le dispositif mobile (10) se trouve hors zone de couverture en se basant sur l'expiration d'une période de temps prédéterminée sans réponse du dispositif mobile (10), et
un gestionnaire d'état hors zone de couverture (23) destiné à l'envoi d'un message de libération de service au point de terminaison distant en réponse à ladite détermination d'un état hors zone de couverture.

11. Le serveur mandataire selon la revendication 10, où ledit serveur mandataire (16) comprend un composant d'établissement de session destiné à l'établissement d'une voie multimédia (18) entre le dispositif mobile (10) et le point de terminaison distant et l'établissement du service multimédia par l'intermédiaire de ladite voie multimédia (18).

12. Le serveur mandataire selon la revendication 11, où ledit serveur mandataire (16) comprend un serveur mandataire SIP (protocole d'ouverture de session).

13. Le serveur mandataire selon l'une quelconque des revendications 10 à 12, où ledit message de libération de service comprend un message SIP BYE.

14. Le serveur mandataire selon l'une quelconque des revendications 10 à 13, où ledit composant (21) destiné à l'envoi d'un message envoie ledit message de manière périodique.

15. Le serveur mandataire selon l'une quelconque des revendications 10 à 14, où ledit composant (21) destiné à l'envoi d'un message envoie ledit message généralement une fois toutes les secondes.

16. Le serveur mandataire selon l'une quelconque des revendications 10 à 15, où ladite période de temps prédéterminée dure de l'ordre de trois à dix secondes.

17. Le serveur mandataire selon l'une quelconque des revendications 10 à 16, où le service multimédia comprend un appel VoIP.

18. Le serveur mandataire selon l'une quelconque des revendications 10 à 16, où le protocole de transport par paquets sans connexion comprend un protocole RTP (protocole de transport en temps réel).

19. Un support lisible par ordinateur comprenant un moyen de code exécuté sur un processeur du serveur mandataire (16) selon l'une quelconque des revendications 10 à 18, ledit moyen de code étant adapté pour exécuter le procédé selon l'une quelconque des revendications 1 à 9.
